# EUROPEAN PATENT SPECIFICATION

(11) **EP 3 162 211 B1**
(45) Date of publication and mention of the grant of the patent: **13.06.2018**
(21) Application number: 16002249.7
(22) Date of filing: 19.10.2016
(51) Int. Cl.: A21C 1/06, A21C 1/14, A21C 11/20

(54) **AUTOMATIC TABLE-TOP MACHINE FOR KNEADING AND EXTRUDING PASTA**
AUTOMATISCHE TISCHPLATTENMASCHINE ZUM KNETEN UND EXTRUDIEREN VON TEIGWAREN
MACHINE À PLATEAUX AUTOMATIQUE POUR LE MALAXAGE ET L'EXTRUSION DE PÂTES ALIMENTAIRES

(30) Priority: 21.10.2015 IT UB20155297
(43) Date of publication of application: 03.05.2017
(73) Proprietor: Imperia & Monferrina S.p.A., 00198 Roma (RM) (IT)
(72) Inventor: Porcari, Gabriele, I-00198 Roma (RM) (IT)
(74) Representative: Aprà, Mario

(56) References cited:
- KR-A- 20110 011 210
- KR-U- 20100 008 840
- KR-Y1- 200 449 608
- US-A- 5 460 506

## Description

The present invention refers to an automatic table-top machine for kneading and extruding pasta.

Automatic table-top machines for kneading and extruding pasta are known.

Known machines of the type specified comprise, substantially, a machine body, which includes the devices that generate and impart motion to the operating tools, i.e. a kneading reel and an auger for extrusion of the dough, and a tank in which said tools operate on this dough.

In the aforesaid known machines, the machine body and the dough forming tank are mechanically connected to each other inseparably. Therefore, maintenance operations, in particular on the operating tools, are somewhat laborious and complex, as they require to be performed by skilled operators. Moreover, the cleaning operations both of the operating tools and of the dough forming tank are also laborious and the result is not always satisfactory.

The present invention, starting from the notion of the aforesaid problems, intends to provide a solution.

An object of the present invention is to provide an automatic table-top machine for kneading and extruding pasta that allows the necessary maintenance operations to be carried out, in particular on the operating tools, in a manner that is easy and safe for the operator.

In addition, an object of the present invention is to provide a machine as specified, which allows cleaning operations both of the operating tools and of the dough forming tank to be carried out in a manner that is easy and safe for the operator, and with very satisfactory results.

Moreover, an object of the present invention is to provide a machine as indicated, which has an essentially simple structure, is easy to install and to carry out subsequent maintenance on, and has relatively low costs.

In view of these objects, the present invention provides an automatic table-top machine for kneading and extruding pasta, the essential feature of which forms the subject-matter of claim 1.

Further advantageous features are described in the dependent claims. Document US-A-5 460 506 discloses a machine in accordance with the preamble of claim 1.

The aforesaid claims are intended as fully incorporated herein.

In particular, according to the present invention, the automatic table-top machine for kneading and extruding pasta, comprising a machine body, which includes electric gear motor means having an output shaft with horizontal axis, transmission means from said output shaft to a driven shaft with axis horizontal and parallel to the axis of said output shaft and coaxial to a shaft of a kneading reel, projecting externally to said machine body in a dough forming tank, having below and parallel to said shaft of the kneading reel an extrusion channel, in which there is arranged a worm screw coaxial with respect to said output shaft, which feeds in the manner of an auger extrusion means for forming pasta, wherein said tank is structured substantially in the manner of a hopper, having two lateral chute-like walls, opposite and converging at the bottom into said extrusion channel, and two opposite walls, front and rear, substantially vertical;
said rear wall of said tank is juxtaposed against the vertical wall of said machine body, and is structured as an essentially triangular stiffening frame, comprising an upper horizontal cross-member, which forms a top edge of said tank, and a pair of essentially "V-shaped" branches that form respective edges of said opposite lateral walls and of said channel of said tank;
said peripheral frame extends beyond said tank and provides an outer flange fixed with respect to said tank;
said tank is fixed with respect to said machine body through detachable connection means and is supported in a cantilever fashion with respect to said vertical wall of said load-bearing frame;
and said detachable connection means connect said outer flange with respect to said vertical wall of said load-bearing frame.

The present invention will be more apparent from the detailed description below, with reference to the accompanying drawing, illustrating an example of embodiment of the automatic table-top machine for kneading and extruding pasta according to the present invention, wherein:
- Fig. 1 is a perspective view from one side of an example of embodiment of the automatic table-top machine for kneading and extruding pasta according to the present invention;
- Fig. 2 is a perspective view from the other side of the machine of Fig. 1;

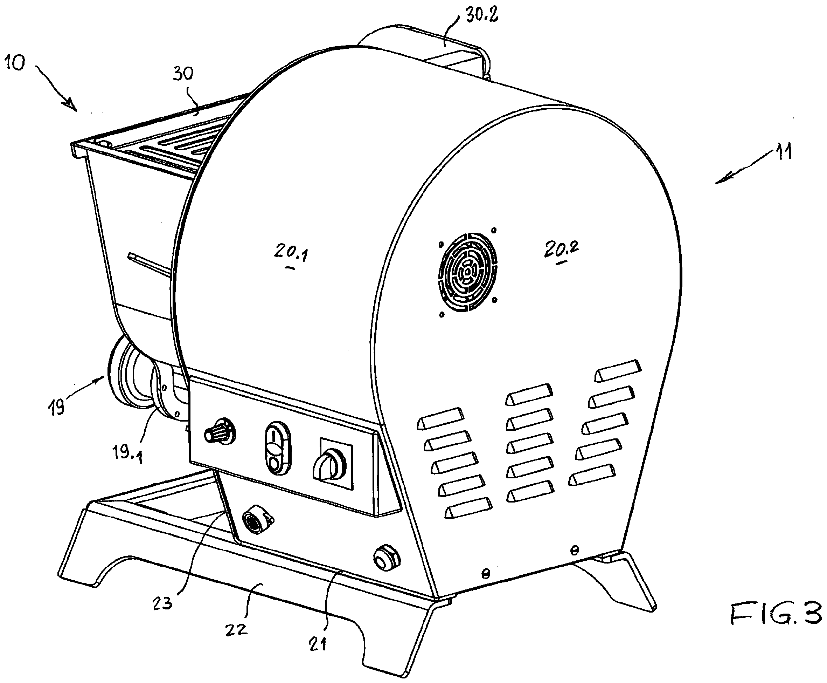

- Fig. 3 is a rear perspective view of the machine of Fig. 1;
- Fig. 4 is a lateral perspective view from above of the machine of Fig. 1, with parts in a partially cutaway view;
- Fig. 5 is a rear perspective view from above of the machine of Fig. 4, with a hood part remove for clearer illustration;
- Fig. 6 is a front perspective view of the machine of Fig. 1, in which a dough forming tank and relative lid are illustrated in an exploded view with respect to a machine body;
- Fig. 7 is a rear perspective view of said dough forming tank;
- Fig. 8 is a view similar to that of Fig. 7, but wherein the operating tools, i.e. a kneading reel and a worm screw, are illustrated in said dough forming tank;
- Fig. 9 is a vertical sectional view of the machine of Fig. 1.

In the aforesaid figures from 1 to 6 and 9, the number 10 indicates, as a whole, an automatic table-top machine for kneading and extruding pasta according to an example of embodiment of the present invention.

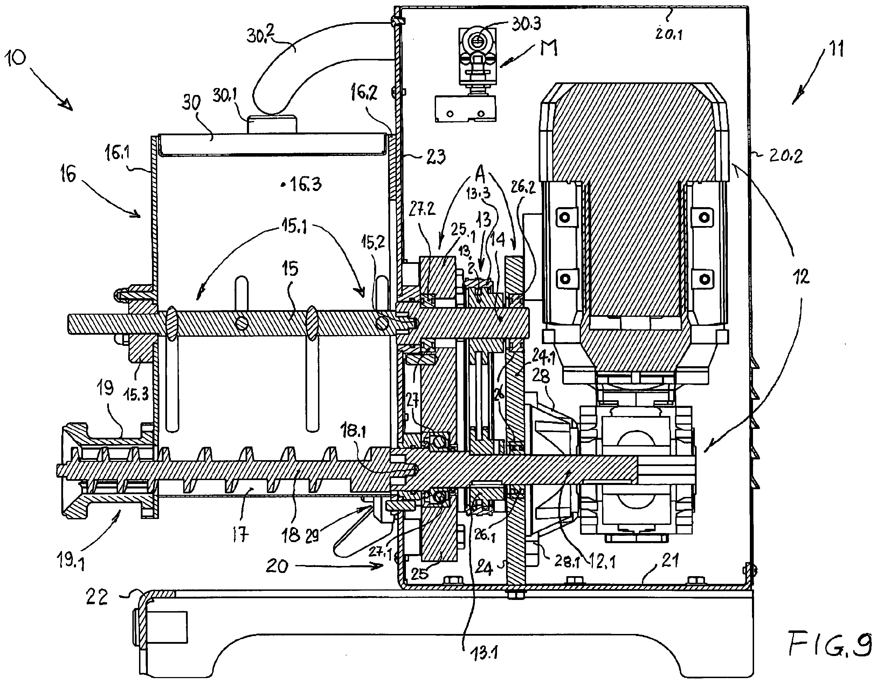

Said automatic table-top machine 10 for kneading and extruding pasta comprises, according to the prior art, a machine body 11, which includes electric gear motor means 12 having an output shaft 12.1 with horizontal axis, transmission means 13 from said output shaft 12.1 to a driven shaft 14 with axis horizontal and parallel to the axis of said output shaft 12.1 and coaxial to a shaft 15 of a kneading reel 15.1, projecting externally to said machine body 11 in a dough forming tank 16, having below and parallel to said shaft 15 of the kneading reel 15.1 an extrusion channel 17, in which there is arranged a worm screw 18 coaxial with respect to said output shaft 12.1, which feeds in the manner of an auger extrusion means 19 for forming pasta (Fig. 9).

More specifically, said reel 15.1 comprises a plurality of radial fingers fixed with respect to said shaft 15 and angularly staggered from one another.

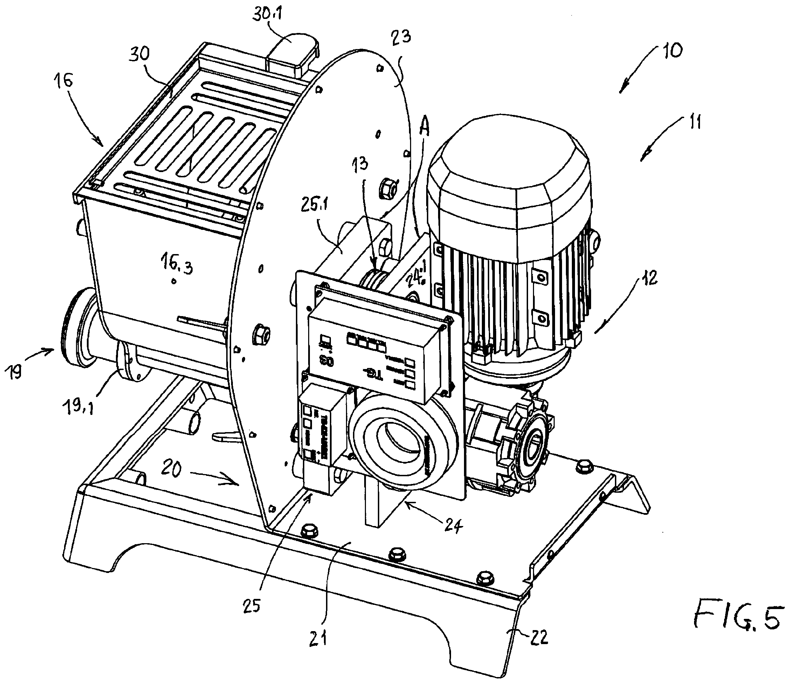

In particular, according to the present invention said machine body 11 advantageously comprises:
- a load-bearing frame 20, including a sheet metal plate bent substantially to 90° and which provides, in a single body, a horizontal base 21, fixed with respect to supporting means 22 on said table, and a vertical wall 23, on the outer face of which said dough forming tank 16 is fixed (Figs. 5 and 9), and
- an inner reinforcement A, comprising:
   - first plate support means 24, including a first vertical plate 24.1, which is fixed with respect to said horizontal base 21, parallel to and spaced from said vertical wall 23,
   - second plate support means 25, including a second vertical plate 25.1, which is fixed to the inner face of said vertical wall 23, and
   - bearing means 26, 27 for supporting and sustaining said output shaft 12.1 and said driven shaft 14, supported with respect to said first plate 24 and to said second plate 25 (Figs. 5 and 9).

The machine body 11 is enclosed between said load-bearing frame 20 and an encircling and removable hood 20.1, having a removable vertical rear wall 20.2, opposite said vertical wall 23.

More specifically, according to the present invention:
- said first plate support means 24 include said first vertical plate 24.1, which is fixed with respect to said horizontal base 21, parallel to and spaced from said vertical wall 23, and supports, in respective through holes with horizontal and parallel axes, first bearing means 26.1, through which the output shaft 12.1 of said gear motor means 12 passes, and second bearing means 26.2 over said first bearing means 26.1,
- said second plate support means 25 include said second vertical plate 25.1, which is fixed to the inner face of said vertical wall 23 and supports, at respective through holes with horizontal and parallel axes, third bearing means 27.1, in which the end of said output shaft 12.1 distal from said gear motor means 12 is supported, and fourth bearing means 27.2 over said third bearing means 27.1 (Fig. 9). Said driven shaft 14 is supported rotating freely between said third bearing means 26.2 and fourth bearing means 27.2.

It should be noted that said vertical plate 25.1 is connected with respect to said vertical wall 23 through spacer means.

More in particular, said transmission means 13 include first pinion means 13.1 mounted coaxial on said output shaft 12.1 and second pinion means 13.2 mounted coaxial on said driven shaft 14, wherein said first 13.1 and second 13.2 pinion means are arranged in proximity of the face of said first plate 24.1 proximal to said vertical wall 23, and flexible transmission means 13.3, which engage said first 13.1 and second 13.2 pinion means (Fig. 9). In the example illustrated (Fig. 9) said flexible transmission means 13.3 consist of a transmission belt, or alternatively they can be produced in the manner of a transmission chain. Moreover, in place of pinion means, pulley means can be provided (variant not illustrated).

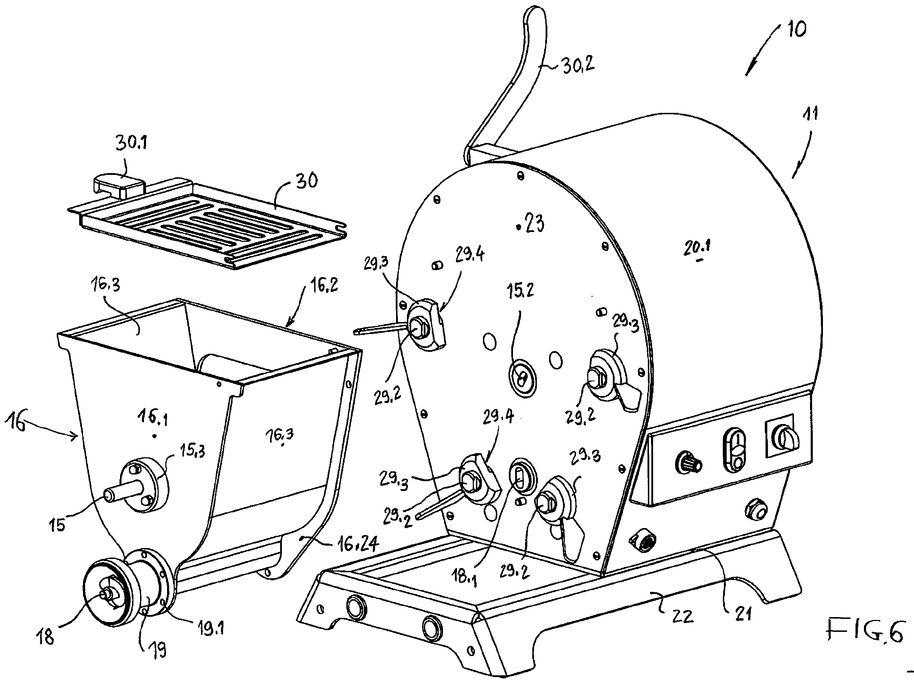

The end of said driven shaft 14 supported by said fourth bearing means 27.2 is facing the outside of said vertical wall 23 of said load-bearing frame through a corresponding through hole, and has said detachable connection means 15.2 with axial coupling for a corresponding end of said shaft 15 of the kneading reel, which is rotated integral with the driven shaft 14 (Figs. 6 and 9).

Moreover, the end of said output shaft 12.1 supported by said third bearing means 27.1 is facing the outside of said vertical wall 23 of said load-bearing frame 20 through a corresponding through hole, and has said detachable connection means 18.1 with axial coupling for a corresponding end of said worm screw 18, which is rotated integral with the output shaft 12.1 (Figs. 6 and 9).

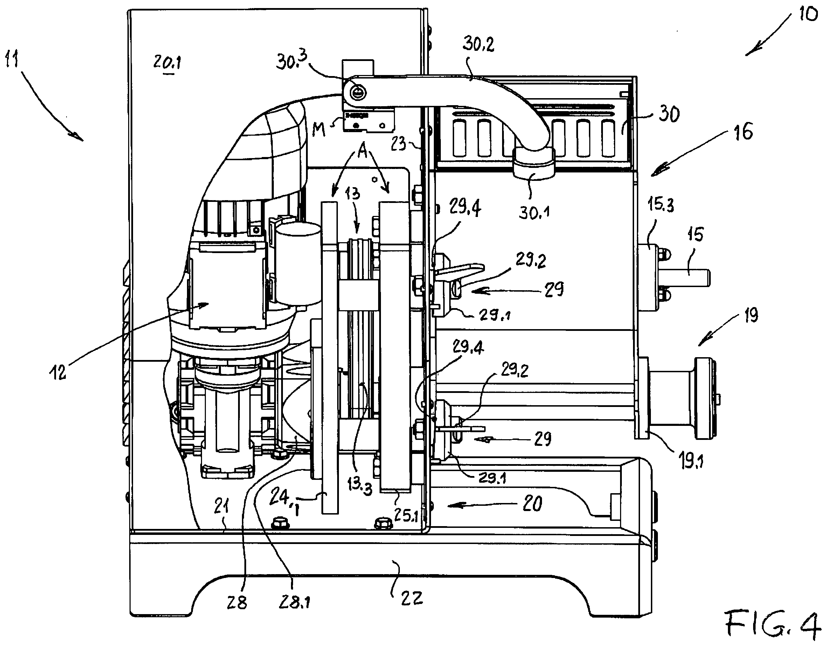

Advantageously, according to the present invention, said inner reinforcement A comprises a substantially bell-shaped support 28, axially perforated, having a peripheral outer flange 28.1 at the larger base thereof, and fixed by means of said flange 28.1 to the face of said first plate 24.1 distal from said vertical wall 23, said substantially bell-shaped support 28 being axially passed through by said output shaft 12.1 and supporting said gear motor means 12 in a cantilever fashion (Figs. 4 and 9).

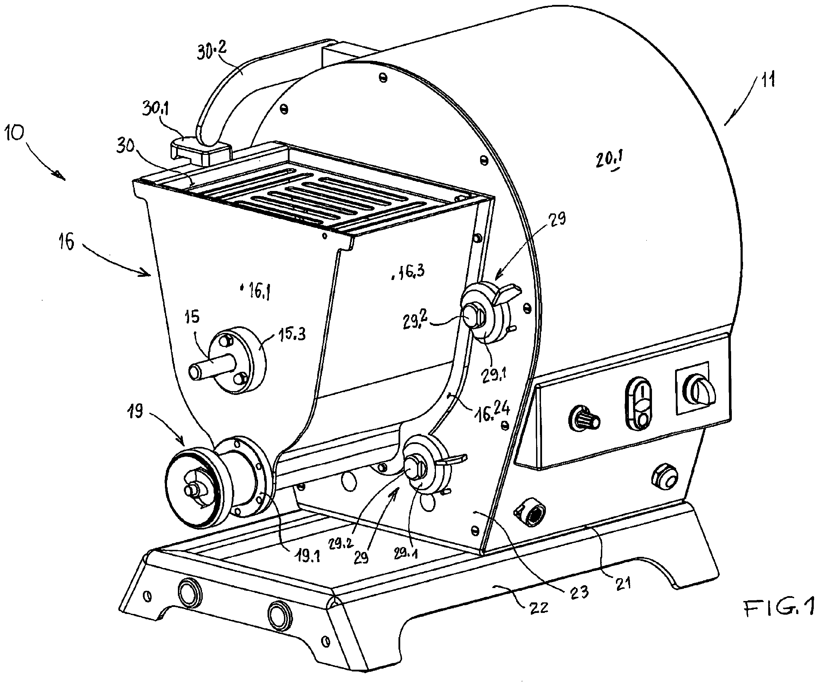

According to the present invention, said dough forming tank 16 is fixed with respect to said machine body 11 through detachable connection means 29 and is supported in a cantilever fashion with respect to said vertical wall 23 of said load-bearing frame 20 (Figs. 1, 2, 4, 6 and 9).

Advantageously, said worm screw 18 is connected, at one end thereof, through detachable connection means 18.1 with respect to said output shaft 12.1 and, at the other end, is supported coaxially with respect to said extrusion means 19.

Preferably, said shaft 15 of the reel 15.1 is connected through said detachable connection means 15.2 with respect to said driven shaft 14.

As can be seen from the accompanying Figs. 1, 2, 7 and 8, said tank 16 is structured in the manner of a hopper 16.1, having two lateral chute-like walls 16.3, opposite and converging at the bottom into said extrusion channel 17, and two opposite walls, front 16.1 and rear 16.2, substantially vertical.

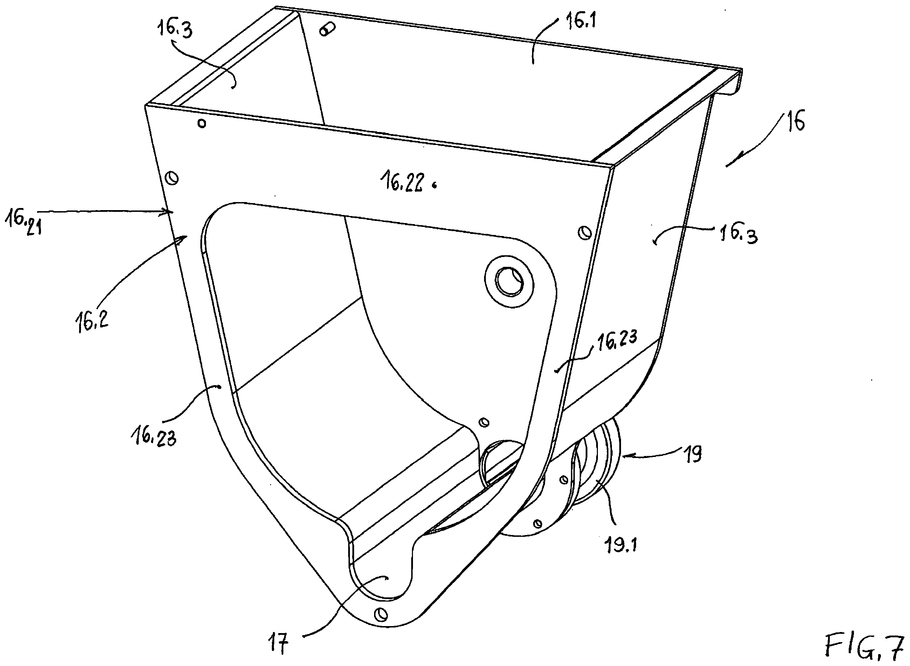

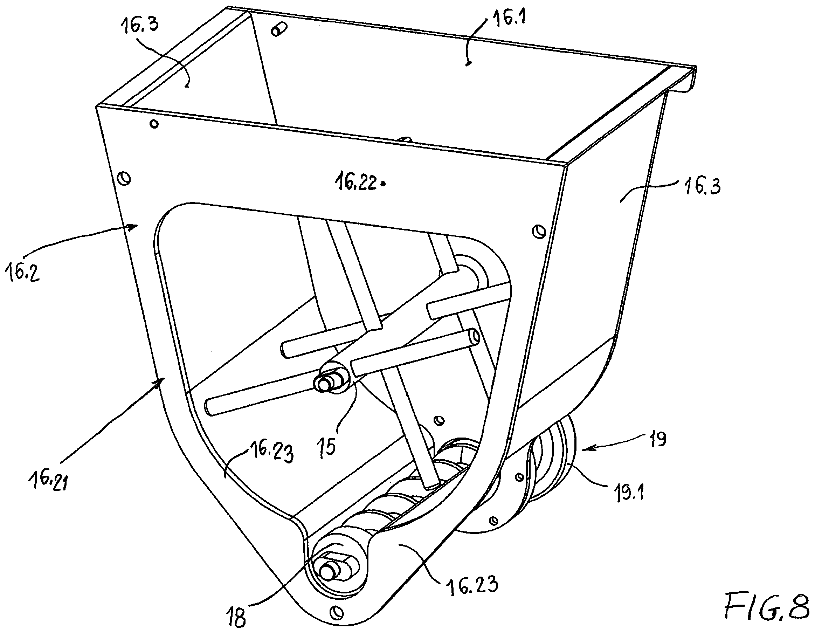

As can be seen in the example of embodiment illustrated (Figs. 7 and 8), said rear wall 16.2 of said tank 16 is juxtaposed against the vertical wall 23 of said machine body 11, and is structured as an essentially triangular stiffening frame 16.21, comprising an upper horizontal cross-member 16.22, which forms a top edge of said tank 16, and a pair of essentially "V-shaped" branches 16.23 that form respective edges of said opposite lateral walls 16.3 and of said channel 17 of said tank 16.

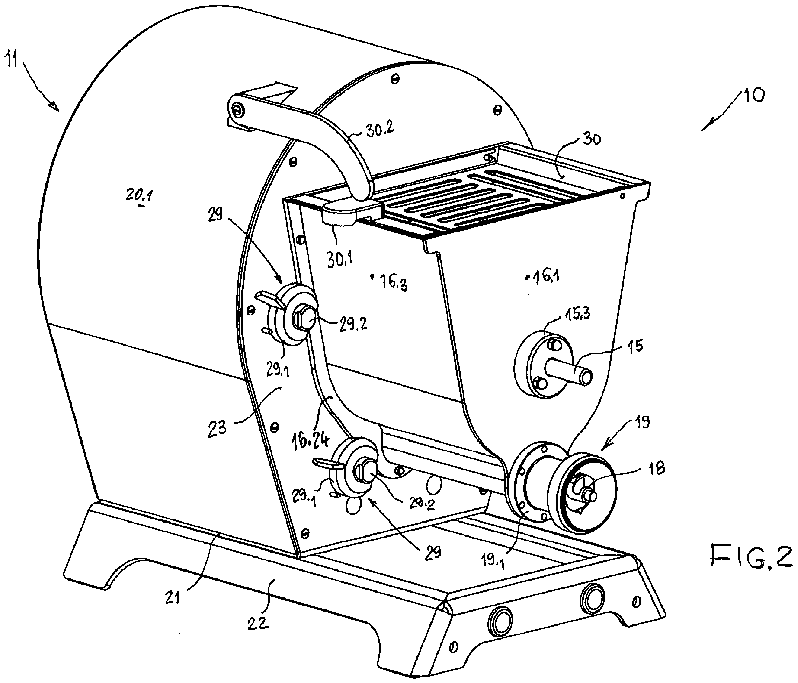

In particular, said peripheral frame 16.21 is extended beyond said tank 16 and provides an outer flange 16.24 fixed with respect to said tank 16 (Figs. 1 and 2).

Said tank 16 is fixed with respect to said machine body 11 through said detachable connection means 29 and is supported in a cantilever fashion with respect to said vertical wall 23 of said load-bearing frame 20 (Figs. 1, 2, 4 and 9).

Advantageously, said detachable connection means 29 connect said outer flange 16.24 with respect to said vertical wall 23 of said load-bearing frame 20.

In this way, the operator can take action, after having separated the tank 16 from the machine body, to perform maintenance and/or cleaning operations, both of the operating tools and of the dough forming tank, in a manner that is easy and safe for the operator, and with very satisfactory results.

As can be seen in particular in Figs. 1, 2, 4 and 6, said detachable connection means 29 comprise a plurality of manually controlled cam means 29.1, arranged on the outer face of said vertical wall 23 of said load-bearing frame 20, each of which comprises a cam 29.3 rotating about a respective pin 29.2 with axis horizontal and parallel to the axes of said shafts 12.1, 14, 15, fixed to said vertical wall 23 in proximity of said outer flange 16.24, wherein said rotating cam 29.3 has a front cam ramp 29.4, which engages, in one direction of rotation, said outer flange 16.24 of said tank 16, fixing the flange with pressure against said vertical wall 23 of said machine body 11, and, in the opposite direction of rotation, disengages said outer flange 16.24 of said tank 16, allowing removal of said tank 16.

Said cam means 29 comprise a radial wing integral with the cam body 29.3, for the manual rotation of these same means. Advantageously, said extrusion means 19 are structured as a removable extrusion nozzle 19.1, fixed to the outer face of said front wall 16.1 of said tank 16 and in which one end of said worm screw 18 is supported coaxially.

Preferably, said automatic machine 10 comprises a supporting and centering bushing 15.3 fixed to the outer face of said front wall 16.1 of said tank 16, at a respective through hole and axially aligned with respect to said driven shaft 14, one end of said shaft 18 of the reel 18.1 passing through said respective hole of said front wall 16.1, being supported coaxially and in a rotating and removable manner in said bushing 15.3.

More in particular, as can be seen in the accompanying figures, said automatic machine 10 comprises, according the present example of embodiment of the invention:
- a lid 30 that closes, in a removable manner, a top opening of said tank 16 with hopper 16.1 and which has a lid part 30.1;
- a lever arm 30.2 pivoting about a respective pin 30.3 with horizontal axis, fixed with respect to said machine body 11, said arm 30.2 which can be pivoted in operation to a first pivoted position, in which a first part thereof rests by gravity in contact with said lid part 30.1 (Figs. 1, 2, 4 and 9), and to other pivoted positions (Fig. 6), in which said first part thereof does not rest by gravity in contact with said lid part 30.1, and
- microswitch means M, electrically connected with respect to an electric circuit to supply and control said gear motor means 12 and a member of which moving between an electrically closed position and an electrically open position is operatively associated with another part of said pivoting arm 30.2, so that the arrangement of said arm 30.2 in said first pivoted position causes the electrical closing of said electric circuit through said microswitch means M, while the arrangement of said arm 30.2 in said other pivoted positions causes the electrical opening of said electric circuit through said microswitch means M.

This ensures the operating safety of the machine 10, which can only function with the lid 30 closed over the tank 16 and the pivoting arm 30.2 resting by gravity on the part 30.1 of said lid 30.

Advantageously, said automatic machine according to the invention comprises a gasket (not shown) interposed between said rear wall of said tank with corresponding outer flange of the same tank and said vertical wall of said machine body.

As is apparent from the above, said automatic table-top machine 10 for kneading and extruding pasta according to the present invention allows the necessary maintenance operations to be carried out, in particular on the operating tools, in a manner that is easy and safe for the operator.

In addition, said machine 10 as specified allows cleaning operations both of the operating tools and of the dough forming tank to be carried out in a manner that is easy and safe for the operator, and with very satisfactory results.

Moreover, said machine 10 as stated, has an essentially simple structure, is easy to install and to carry out subsequent maintenance on, and has relatively low costs.

As is apparent from the above, the present invention allows the objects specified in the introduction to be achieved in a simple and advantageous manner.

## Claims

1. Automatic table-top machine (10) for kneading and extruding pasta, comprising a machine body (11), which includes electric gear motor means (12) having an output shaft (12.1) with horizontal axis, transmission means (13) from said output shaft (12.1) to a driven shaft (14) with axis horizontal and parallel to the axis of said output shaft (12.1) and coaxial to a shaft (15) of a kneading reel (15.1), projecting externally to said machine body (11) in a dough forming tank (16), having below and parallel to said shaft (15) of the kneading reel (15.1) an extrusion channel (17), in which there is arranged a worm screw (18) which feeds in the manner of an auger extrusion means (19) for forming pasta, wherein said tank (16) is substantially structured in the manner of a hopper (16.1), having two sloping lateral walls (16.3), opposite and converging at the bottom in said extrusion channel (17), and two substantially vertical opposite walls, front (16.1) and rear (16.2); **characterized in that** the worm screw (18) is coaxial with respect to said output shaft (12.1);
**in that** said rear wall (16.2) of said tank (16) is juxtaposed against a vertical wall (23) of said machine body (11) and is structured as an essentially triangular stiffening frame (16.21), comprising an upper horizontal cross-member (16.22), which forms a top edge of said tank (16), and a pair of essentially "V-shaped" branches (16.23) that form respective edges of said opposite lateral walls (16.3) and of said channel (17) of said tank (16);
**in that** said peripheral frame (16.21) extends beyond said tank (16) and provides an outer flange (16.24) fixed with respect to said tank (16);
**in that** said tank (16) is fixed with respect to said machine body (11) through detachable connection means (29) and is supported in a cantilever fashion with respect to said vertical wall (23) of said load-bearing frame (20);
**and in that** said detachable connection means (29) connect said outer flange (16.24) with respect to said vertical wall (23) of said load-bearing frame (20).

2. Automatic table-top machine (10) for kneading and extruding pasta according to claim 1, **characterized in that** said detachable connection means (29) comprise a plurality of cam means (29.1), arranged on the outer face of said vertical wall (23) of said load-bearing frame (20), each of which comprises a cam (29.3) rotating about a respective pin (29.2) with horizontal axis and parallel to the axes of said shafts (12.1, 14, 15), fixed to said vertical wall (23) in proximity of said outer flange (16.24), wherein said rotating cam (29.3) has a cam ramp (29.4), which engages, in one direction of rotation, said outer flange (16.24) of said tank (16), fixing this flange with pressure against said vertical wall (23) of said machine body (11), and in the opposite direction disengages said outer flange (16.24) of said tank (16), allowing detachment of said tank (16).

3. Automatic table-top machine (10) for kneading and extruding pasta according to claim 1 and/or 2, **characterized in that** said extrusion means (19) are structured as removable extrusion nozzle (19.1), fixed to the outer face of said front wall (16.1) of said tank (16) and in which one end of said worm screw (18) is supported coaxially.

4. Automatic table-top machine (10) for kneading and extruding pasta according to claim 1, 2 and/or 3, **characterized in that** it comprises a supporting and centering bushing (15.3) fixed to the outer face of said front wall (16.1) of said tank (16), at a respective through hole and axially aligned with respect to said driven shaft (14), one end of said shaft (18) of the reel (18.1) passing through said respective hole of said front wall (16.1) being supported coaxially and in a rotating and removable way in said bushing (15.3).

5. Automatic table-top machine (10) for kneading and extruding pasta according to one or more of the preceding claims, **characterized in that** it comprises:
- a cover (30) that closes, in a removable way, a top opening of said hopper (16.1) tank (16) and which has a part of cover (30.1);
- a lever arm (30.2) oscillating about a respective pin (30.3) with a horizontal axis, fixed with respect to said machine body (11), said arm (30.2) being able to be operatively oscillated in a first oscillated position, wherein a first part thereof rests through gravity in contact with said part of cover (30.1), and in other oscillated positions, wherein said first part thereof does not rest through gravity in contact with said part of cover (30.1), and
- microswitch means (M), electrically connected with respect to an electric circuit for supplying and controlling said gear motor means (12) and a member of which movable between an electrically closed position and an electrically open position is operatively associated with another part of said oscillating arm (30.2), so that the arrangement of said arm (30.2) in said first oscillated position causes electrical closing of said electric circuit through said microswitch means (M), while the arrangement of said arm (30.2) in said other oscillated positions causes electrical opening of said electric circuit through said microswitch means (M).

6. Automatic table-top machine for kneading and extruding pasta according to one or more of the preceding claims, **characterized in that** it comprises a gasket interposed between said rear wall of said tank with corresponding outer flange of the same tank and said vertical wall of said machine body.

## Patentansprüche

1. Automatische Tischmaschine (10) zum Kneten und Extrudieren von Pasta, umfassend einen Maschinenkörper (11), der elektrische Getriebemotorenmittel (12) einschließt, die eine Ausgangswelle (12.1) mit horizontaler Achse, Übertragungsmittel (13) von besagter Ausgangswelle (12.1) zu einer Antriebswelle (14) mit Achse aufweisen, die horizontal und parallel zu der der besagten Ausgangswelle (12.1) und koaxial zu einer Welle (15) einer Knetrolle (15.1) verläuft, extern hervorspringend aus dem besagten Maschinenkörper (11) in einen Teigformbehälter (16), der darunter und parallel zu besagter Welle (15) der Knetrolle (15.1) einen Extrusionskanal (17) aufweist, in dem eine Endlosschraube (18) angeordnet ist, die wie eine Schneckenschraube Extrusionsmittel (19) zum Pastaformen einspeist,
wobei besagter Behälter (16) im Wesentlichen wie ein Trichter (16.1) geformt ist, aufweisend zwei seitliche Gleitwände (16.3), die gegenübergestellt sind und darunter in besagtem Extrusionskanal (17) zusammenlaufen, und zwei entgegengesetzte Wände, Vorderwand (16.1) und Hinterwand (16.2), die im Wesentlichen vertikal sind;
**dadurch gekennzeichnet, dass** die Endlosschraube (18) in Bezug auf besagte Ausgangswelle (12.1) koaxial ist;
**dadurch gekennzeichnet, dass** besagte Hinterwand (16.2) des besagten Behälters (16) gegen eine vertikale Wand (23) des besagten Maschinenkörpers (11) gesetzt ist und als ein im Wesentlichen dreieckiger Verstärkungsrahmen (16.21) gestaltet ist, umfassend einen oberen horizontalen Querträger (16.22), der einen oberen Rand des besagten Behälters (16) bildet, und ein Paar im Wesentlichen "V"-förmige Seitenarme (16.23), die diesbezügliche Ränder der besagten gegenübergestellten Seitenwände (16.3) und des besagten Kanals (17) des besagten Behälters (16) bilden;
**dadurch gekennzeichnet, dass** besagter peripherer Rahmen (16.21) jenseits des besagten Behälters (16) erstreckt und für einen in Bezug auf selbigen besagten Behälter (16) externen Flansch (16.24) sorgt;
**dadurch gekennzeichnet, dass** besagter Behälter (16) in Bezug auf besagten Maschinenkörper (11) mittels auseinandernehmbarer Verbindungsmittel (29) befestigt ist und in Bezug auf besagte vertikale Wand (23) des besagten Tragerahmens (20) auskragend unterstützt wird;
**und dass** besagte auseinandernehmbare Verbindungsmittel (29) den besagten externen Flansch (16.24) in Bezug auf besagte vertikale Wand (23) des besagten Tragerahmens (20) verbinden.

2. Automatische Tischmaschine (10) zum Kneten und Extrudieren von Pasta gemäß Anspruch 1, **dadurch gekennzeichnet, dass** besagte auseinandernehmbare Verbindungsmittel (29) eine Vielzahl an Nockenmittel (29.1) umfassen, die auf der Außenfläche der besagten vertikalen Wand (23) des besagten Tragerahmens (20) angeordnet sind, von denen jedes dieser einen Nocken (29.3) umfasst, der um einen diesbezüglichen Stift (29.2) mit horizontaler Achse rotiert und parallel ist zu den Achsen der besagten Wellen (12.1, 14, 15), der befestigt ist an besagter vertikalen Wand (23) in der Nähe des besagten externen Flansches (16.24), wobei besagter rotierender Nocken (29.3) eine Nockenrampe (29.4) aufweist, die in einer Rotationsrichtung den besagten externen Flansch (16.24) des besagten Behälters (16) in Anspruch nimmt und dabei den Flansch selbst mit Druck gegen besagte vertikale Wand (23) des besagten Maschinenkörpers (11) befestigt, und in der entgegengesetzten Rotationsrichtung den besagten externen Flansch (16.24) des besagten Behälters (16) freigibt und so das Abnehmen des besagten Behälters (16) erlaubt.

3. Automatische Tischmaschine (10) zum Kneten und Extrudieren von Pasta gemäß Anspruch 1 und/oder 2, **dadurch gekennzeichnet, dass** besagte Extrusionsmittel (19) als abnehmbare Extrusionsdüse (19.1) gestaltet sind, die an der Außenseite der besagten Vorderwand (16.1) des besagten Behälters (16) befestigt ist und in der ein Ende der besagten Endlosschraube (18) koaxial gestützt wird.

4. Automatische Tischmaschine (10) zum Kneten und Extrudieren von Pasta gemäß Anspruch 1, 2 und/oder 3, **dadurch gekennzeichnet, dass** sie eine Trage- und Zentrierbuchse (15.3) umfasst, die an der Außenseite der besagten Vorderwand (16.1) des besagten Behälters (16), in Übereinstimmung mit einem entsprechenden durchgehenden Loch befestigt und axial in Bezug auf besagte Antriebswelle (14) ausgerichtet ist, wobei ein Ende der besagten Welle (18) der Rolle (18.1), die durch das besagte diesbezügliche Loch der besagten Vorderwand (16.1) durchgeht, koaxial, rotierend und abnehmbar in besagter Buchse (15.3) gestützt wird.

5. Automatische Tischmaschine (10) zum Kneten und Extrudieren von Pasta gemäß einem oder mehreren der vorhergehenden Ansprüche, **dadurch gekennzeichnet, dass** sie Folgendes umfasst:
- einen Deckel (30), der, abnehmbar, eine obere Öffnung des besagten trichterförmigen (16.1) Behälters (16) abschließt und der einen Teil des Deckels (30.1) aufweist;
- einen Hebelarm (30.2), der um einen diesbezüglichen Stift (30.3) mit horizontaler Achse schwingt, und in Bezug auf besagten Maschinenkörper (11) fest ist, wobei besagter Arm (30.2) wirksam in eine erste geschwenkte Lage geschwenkt werden kann, bei der ein erster Teil von ihm durch Schwerkraft in Kontakt mit besagtem Teil des Deckels (30.1) liegt, und in anderen geschwenkten Lagen, bei denen besagter erster Teil von ihm nicht durch Schwerkraft in Kontakt mit besagtem Teil des Deckels (30.1) liegt, und
- Mikroschaltermittel (M), elektrisch verbunden in Bezug auf einen Stromkreis zur Versorgung und zum Steuern der besagten Getriebemotorenmittel (12) und von denen ein Glied, beweglich zwischen einer elektrischen Schließlage und einer elektrischen Öffnungslage, mit einem anderen Teil des besagten schwingenden Arms (30.2) wirksam assoziiert ist, so dass die Anordnung des besagten Arms (30.2) in der besagten ersten geschwenkten Lage den elektrischen Verschluss des besagten elektrischen Stromkreises durch besagte Mikroschaltermittel (M) bewirkt, während die Anordnung des besagten Arms (30.2) in den besagten anderen geschwenkten Lagen die elektrische Öffnung des besagten elektrischen Stromkreises durch besagte Mikroschaltermittel (M) bewirkt.

6. Automatische Tischmaschine (10) zum Kneten und Extrudieren von Pasta gemäß einem oder mehreren der vorhergehenden Ansprüche, **dadurch gekennzeichnet, dass** sie eine Dichtung umfasst, die zwischen besagter Hinterwand des besagten Behälters mit entsprechendem externem Flansch des Behälters selbst und besagter vertikaler Wand des besagten Maschinenkörpers eingefügt ist.

## Revendications

1. Machine automatique (10) de table pour pétrir et extruder des pâtes alimentaires, comprenant un corps de machine (11), qui inclut des moyens à motoréducteur électrique (12) ayant un arbre (12.1) en sortie à axe horizontal, des moyens de transmission (13) dudit arbre (12.1) en sortie à un arbre (14) mené à axe horizontal et parallèle à celui dudit arbre (12.1) en sortie et coaxial à un arbre (15) de caret de pétrissage (15.1), faisant saillie vers l'extérieur dudit corps de machine (11) dans une cuve (16) de formation de pétrissage, laquelle possède sur la partie inférieure et parallèle audit arbre (15) de caret de pétrissage (15.1) un canal (17) d'extrusion, dans lequel est disposée une vis sans fin (18), laquelle alimente en guise de vis d'Archimède des moyens d'extrusion (19) pour la formation de pâtes alimentaires,
où ladite cuve (16) est conformée substantiellement en guise de trémie (16.1), présentant deux parois latérales (16.3) à goulotte, opposées et convergentes dans la partie inférieure dans ledit canal (17) d'extrusion, et deux parois opposées, antérieure (16.1) et postérieure (16.2), substantiellement verticales;
**caractérisée par le fait que** la vis sans fin (18) est coaxiale par rapport audit arbre (12.1) en sortie;
**par le fait que** ladite paroi postérieure (16.2) de ladite cuve (16) est juxtaposé contre une paroi verticale (23) dudit corps de machine (11) et est conformée comme châssis (16.21) de raidissement essentiellement triangulaire, comprenant une traverse horizontale supérieure (16.22), qui forme un bord de sommet de ladite cuve (16), et une paire de tronçons (16.23) essentiellement en « V » qui forment les bords respectifs desdits parois latérales opposées (16.3) et dudit canal (17) de ladite cuve (16);
**par le fait que** ledit châssis périphérique (16.21) est prolongé au-delà de ladite cuve (16) et prévoit une bride extérieure (16.24) fixe par rapport à ladite même cuve (16);
**par le fait que** ladite cuve (16) est fixée par rapport audit corps de machine (11) à l'aide de moyens de liaison démontables (29) et elle est supportée en porte-à-faux par rapport à ladite paroi verticale (23) dudit châssis (20) porteur;
**et par le fait que** lesdits moyens de liaison démontables (29) lient ladite bride extérieure (16.24) par rapport à ladite paroi verticale (23) dudit châssis (20) porteur.

2. Machine automatique (10) de table pour pétrir et extruder des pâtes alimentaires selon la revendication 1, **caractérisée par le fait que** lesdits moyens de liaison démontables (29) comprennent une pluralité de moyens à came (29.1), disposés sur la face extérieure de ladite paroi verticale (23) dudit châssis porteur (20), chacun desquels comprend une came (29.3) pivotant autour d'un pivot respectif (29.2) à axe horizontal et parallèle aux axes desdits arbres (12.1, 14, 15), fixé à ladite paroi verticale (23) à proximité de ladite bride extérieure (16.24), où ladite came pivotante (29.3) présente une rampe de came (29.4), qui engage, dans un sens de rotation, ladite bride extérieure (16.24) de ladite cuve (16), fixant la bride même en pression contre ladite paroi verticale (23) dudit corps de machine (11), et dans le sens de rotation inverse libère ladite bride extérieure (16.24) de ladite cuve (16), permettant le démontage de ladite cuve (16).

3. Machine automatique (10) de table pour pétrir et extruder des pâtes alimentaires selon la revendication 1 et/ou 2, **caractérisée par le fait que** lesdits moyens d'extrusion (19), sont conformés comme tuyère d'extrusion amovible (19.1), fixée sur la face extérieure de ladite paroi antérieure (16.1) de ladite cuve (16) et dans lequel est supporté coaxialement une extrémité de ladite vis sans fin (18).

4. Machine automatique (10) de table pour pétrir et extruder des pâtes alimentaires selon la revendication 1, 2 et/ou 3, **caractérisée par le fait qu'**elle comprend une douille (15.3) de support et centrage fixée sur la face extérieure de ladite paroi antérieure (16.1) de ladite cuve (16), au niveau d'un trou passant correspondant et alignée axialement par rapport audit arbre mené (14), une extrémité dudit arbre (18) de caret pétrisseur (18.1), passant à traverse ledit trou correspondant de ladite paroi antérieure (16.1) étant supportée coaxialement et de manière rotative et amovible dans ladite douille (15.3).

5. Machine automatique (10) de table pour pétrir et extruder des pâtes alimentaires selon une ou plusieurs des revendications précédentes, **caractérisée par le fait qu'elle comprend** :
- un couvercle (30) qui ferme, de manière amovible, une ouverture de sommet de ladite cuve (16) à trémie (16.1) et lequel présente une partie de couvercle (30.1);
- un bras de levier (30.2) oscillant autour d'un pivot correspondant (30.3) à axe horizontal, fixe par rapport audit corps de machine (11), ledit bras (30.2) pouvant être opérativement oscillé dans une première position oscillée, dans laquelle sa première partie appuie par gravité en contact avec ladite partie de couvercle (30.1), et dans d'autres positions oscillées, où ladite sa première partie n'appuie pas par gravité en contact avec ladite partie de couvercle (30.1), et
- des moyens à micro-interrupteur (M), électriquement enclenchés par rapport à un circuit électrique d'alimentation et contrôle desdits moyens à motoréducteur (12) et dont un organe mobile entre une position de fermeture électrique et une position d'ouverture électrique est opérativement associé à une autre partie dudit bras (30.2) oscillant, de sorte que l'arrangement dudit bras (30.2) dans ladite première position oscillée détermine la fermeture électrique dudit circuit électrique à l'aide desdits moyens à micro-interrupteur (M), tandis que l'arrangement dudit bras (30.2) dans lesdites autres positions oscillées détermine l'ouverture électrique dudit circuit électrique à l'aide desdits moyens à micro-interrupteur (M).

6. Machine automatique (10) de table pour pétrir et extruder des pâtes alimentaires selon une ou plusieurs des revendications précédentes, **caractérisée par le fait qu'**elle comprend une garniture interposée entre ladite paroi postérieure de ladite cuve avec bride extérieure correspondante de la cuve même et ladite paroi verticale dudit corps de machine.
